Europäisches Patentamt

European Patent Office

Office européen des brevets

(11) Veröffentlichungsnummer: **0 130 406**
**A2**

(12) **EUROPÄISCHE PATENTANMELDUNG**

(21) Anmeldenummer: **84106458.7**

(22) Anmeldetag: **06.06.84**

(51) Int. Cl.⁴: **F 02 M 31/12**

---

(30) Priorität: **30.06.83 DE 3323569**

(43) Veröffentlichungstag der Anmeldung: **09.01.85**
**Patentblatt 85/2**

(84) Benannte Vertragsstaaten: **DE FR GB IT SE**

(71) Anmelder: **BAYERISCHE MOTOREN WERKE Aktiengesellschaft, Postfach 40 02 40 Petuelring 130, D-8000 München 40 (DE)**

(72) Erfinder: **Maier, Peter, Dipl.-Ing., Walchenseeplatz 1, D-8000 München 90 (DE)**
Erfinder: **Goldbrunner, Wilhelm, Dipl.-Ing., Hardenstrasse 6, D-8000 München 45 (DE)**

(74) Vertreter: **Bullwein, Fritz, Bayerische Motoren Werke Aktiengesellschaft Postfach 40 02 40 Petuelring 130 AJ-33, D-8000 München 40 (DE)**

---

(54) **Schaltungsanordnung zu einer Heizvorrichtung für Kraftstoff.**

(57) Eine Schaltungsanordnung zu einer Heizvorrichtung für den Kraftstoff einer Brennkraftmaschine, insbesondere einer Diesel-Brennkraftmaschine besitzt einen Druckschalter, der mit einem Druck in der Zuführungsleitung zu einer Kraftstoff-Einspritzpumpe beaufschlagt ist und der bei einem anormalen Druckwert die Heizvorrichtung einschaltet.

EP 0 130 406 A2

Schaltungsanordnung zu einer Heizvorrichtung für Kraftstoff

Die Erfindung bezieht sich auf eine Schaltungsanordnung
zu einer Heizvorrichtung für den Kraftstoff einer Brennkraftmaschine, insbesondere einer Diesel-Brennkraftmaschine, mit einem Schalter, der mit der Heizvorrichtung
in Reihe liegt und der abhängig von vorgegebenen Bedingungen betätigt ist.

Aus der EP-OS 51 936 ist es bekannt, als Schalter einen
Temperaturschalter zu verwenden, der der umgebenden
Atmosphäre ausgesetzt ist. Ein derartiger Schalter ist
jedoch völlig unzureichend. Zum einen ist die Temperatur des Kraftstoffs, bei der eine Trübung einsetzt und
von der ab mit Störungen der Kraftstoffversorgung zu
rechnen ist, innerhalb eines Gebietes oder eines Landes
sehr unterschiedlich. Derartige Störungen sind bedingt
durch ausfallende Paraffinkristalle, die ein in der Regel
vorhandenes Kraftstoffilter zumindest teilweise zusetzen. Hinzu kommt der Einfluß eines derartigen Filters
selbst, das je nach Verschmutzungsgrad einen von der
Temperatur des Kraftstoffs abhängigen Widerstand darstellt. Schließlich ist ein auf die Umgebungstemperatur
ansprechender Schalter nur ein völlig unzureichendes Maß
für die Temperatur des Kraftstoffs selbst. Dies und die
fehlende Berücksichtigung der Kraftstoffqualität führen
dazu, daß eine außentemperaturabhängige Heizvorrichtung unnötig oft und lange eingeschaltet ist und das Bordnetz unnötig belastet wird.

Der Erfindung liegt die Aufgabe zugrunde, eine Schaltungsanordnung der eingangs genannten Art zu schaffen,
bei der die Heizvorrichtung nur eingeschaltet ist, wenn
dies erforderlich ist.

Die Erfindung löst diese Aufgabe dadurch, daß der
Schalter ein Druckschalter ist, der mit dem Druck in der
Kraftstoff-Zuführungsleitung zu einer Kraftstoff-Einspritzpumpe beaufschlagt ist.

Ein derartiger Druckschalter berücksichtigt sowohl die
Einflüsse der Kraftstofftemperatur selbst als auch die
der systembedingten Widerstände, wie beispielsweise des
Kraftstoffilters. Ergeben diese Einflüsse für sich oder
in Kombination einen Druckwert, der größer oder gleich dem für
den Druckschalter maßgeblichen Wert ist, so wird die
Heizvorrichtung eingeschaltet und die weitere ungestörte
Kraftstoffversorgung sichergestellt. Durch die druckabhängige Einschaltung der Heizvorrichtung wird erreicht,
daß die Heizvorrichtung nur bei einer tatsächlichen
Notwendigkeit wirksam ist.

Der für den Betrieb der Heizvorrichtung maßgebliche Druck
kann auf unterschiedliche Weise abgenommen werden. Eine
Möglichkeit besteht darin, den Unterdruck in der Zuführungsleitung des Kraftstoffs zur Einspritzpumpe zu verwenden. Alternativ hierzu ist es auch möglich, die Heizvorrichtung durch den Differenzdruck an einem Kraftstofffilter zu verwenden. Beide Möglichkeiten lassen sich mit
geringem Aufwand realisieren. Die erste Möglichkeit
besitzt gegenüber der zweiten zusätzlich den Vorteil, daß
hierzu nur ein Anschluß am Kraftstoff-Versorgungssystem
der Brennkraftmaschine erforderlich ist. Eine weitere
Verbesserung der Erfindung besteht darin, den Druckschalter mit einem in Abhängigkeit von der Kraftstofftemperatur schaltenden Schalter in Reihe zu legen. Durch diesen Temperaturschalter wird bei einer an sich unkritischen Temperatur des Kraftstoffs ein Einschalten der Heizvorrichtung bei einem nur singulär auftretenden Druckanstieg, der beispielsweise bei plötzlichem Einstellen des Vollastbetriebs auftritt, vermieden.

Schließlich kann die Heizvorrichtung auch durch ein Selbsthalterelais eingeschaltet sein, das durch den Druckschalter aktiviert ist. Gegenüber einem diskontinuierlichen Betrieb der Heizvorrichtung ergibt sich dadurch der Vorteil, kurzzeitige Minderversorgungen der Kraftstoff-Einspritzpumpe, die durch die nur verzögert wirksame Heizvorrichtung beseitigt werden, von vorneherein auszuschließen.

Ausführungsbeispiele der Erfindung sind in der Zeichnung dargestellt. Es zeigt

Fig. 1    eine Schaltungsanordnung zu einer Heizvorrichtung für Diesel-Kraftstoff und

Fig. 2    eine Alternative zur Schaltungsanordnung von Fig. 1.

Eine schematisch dargestellte elektrische Heizvorrichtung 1 für Diesel-Kraftstoff, die beispielsweise wie in der EP-OS 51 936 mit einem nicht dargestellten Kraftstofffilter zu einer Baueinheit zusammengefaßt ist, wird durch ein Relais 2 geschaltet. Die Relaisspule liegt daher bei in Reihe mit einem Druckschalter 3 und einem Temperaturschalter 4. Der Druckschalter 3 ist mit dem sich zwischen dem Kraftstofffilter und einer nicht dargestellten Einspritzpumpe in der ebenfalls nicht gezeigten Kraftstoffleitung ergebenden Unterdruck beaufschlagt und besitzt einen Schaltpunkt von z.B.(minus) 270 mbar. Der Temperaturschalter 4 ist dem Kraftstoff selbst oder der Atmosphäre ausgesetzt und besitzt einen Schaltpunkt von z.B. 0° C.

Der Temperaturschalter 4 ist bei Temperaturen unter dem angegebenen Schaltpunkt geschlossen. Tritt dabei ein Ausflocken des Kraftstoffs auf, so wird der Schaltpunkt für den Druckschalter 3 erreicht und die Heizvorrichtung 1 eingeschaltet. Durch die Wärmezufuhr wird die sich insbesondere im Bereich des Kraftstoffilters in Form einer starken Drosselung der Kraftstoffströmung bemerkbar machende Ausflockung behoben und eine störungsfreie Kraftstoffversorgung der Einspritzpumpe erreicht. Da der Druckschalter 3 nur wirksam wird, wenn der maßgebliche Druck unter den unter normalen Betriebsbedingungen auftretenden Druck abfällt, wird ein bedarfsgerechtes Einschalten der Heizvorrichtung erreicht. Dieser Bedarf hängt neben der sich in unterschiedlichen Trübungspunkten, d.h. beginnender Ausflockung, auswirkender Kraftstoffqualität ab vom Lastzustand der Brennkraftmaschine und dem Verschmutzungsgrad des Kraftstoffilters. Da ein Ansprechen des Druckschalters 3 auch bei Temperaturen über 0° C kurzzeitig und bei extremer Last und Verschmutzung des Luftfilters auftritt, wird eine dann nicht erforderliche Beheizung des Kraftstoffs durch den Temperaturschalter 4 verhindert.

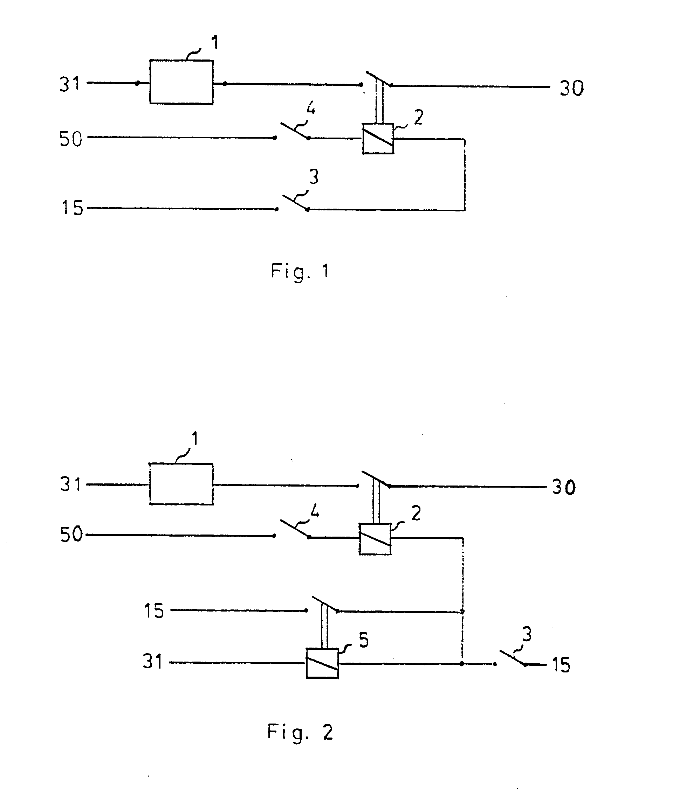

Die Schaltungsanordnung von Fig. 2 unterscheidet sich gegenüber der von Fig. 1 lediglich darin, daß der Druckschalter 3 zusätzlich ein Selbsthalterelais 5 bei erstmaligem Ansprechen während einer Betriebsphase einschaltet. Das Selbsthalterelais 5 sorgt dann unabhängig vom Schaltzustand des Druckschalters 3 für eine Einschaltung der Heizvorrichtung 1, sofern das für den Temperaturschalter 4 maßgebliche Temperaturniveau unterschritten ist. Dadurch lassen sich kurzzeitige Minderversorgungen, die durch Einschalten der Heizvorrichtung 1 behoben werden können, von vornherein ausschließen. Der

0130406

Kraftstoff wird, sofern das Temperaturniveau unterschritten ist und das Selbsthalterelais 5 aktiviert ist, während einer Betriebsphase ständig beheizt.

Patentansprüche:

1. Schaltungsanordnung zu einer Heizvorrichtung für den Kraftstoff einer Brennkraftmaschine, insbesondere einer Diesel-Brennkraftmaschine, mit einem Schalter, der mit der Heizvorrichtung in Reihe liegt und der abhängig von vorgegebenen Bedingungen betätigt ist, dadurch gekennzeichnet, daß der Schalter ein Druckschalter (3) ist, der mit dem Druck in der Kraftstoff-Zuführungsleitung zu einer Kraftstoff-Einspritzpumpe beaufschlagt ist.

2. Schaltungsanordnung nach Anspruch 1, dadurch gekennzeichnet, daß der Druck ein Unterdruck ist.

3. Schaltungsanordnung nach Anspruch 1, dadurch gekennzeichnet, daß der Druck ein Differenzdruck an einem Kraftstoffilter ist.

4. Schaltungsanordnung nach einem der Ansprüche 1 bis 3, dadurch gekennzeichnet, daß der Druckschalter (3) mit einem in Abhängigkeit von der Kraftstoff- bzw. Umgebungstemperatur schaltenden Temperaturschalter (4) in Reihe liegt.

5. Schaltungsanordnung nach einem der Ansprüche 1 bis 4, gekennzeichnet durch ein Selbsthalterelais (5) für die Heizvorrichtung (1), das durch den Druckschalter (3) eingeschaltet ist.

31 ——■—— [1] ——————•———————/ •————————— 30

50 ——————————•—–/ 4 —[⊟ 2]——————┐

15 ——————————•——/ 3 ————————————┘

Fig. 1

31 ——[1]——————————————/ •————————— 30

50 ——————————•——/ 4 —[⊟ 2]—————┐

15 ——————————•—————/ ————————•———┊

31 ——————————[⊟ 5]———————————•——/ 3 —— 15

Fig. 2